(19)

Europäisches
Patentamt

European
Patent Office

Office européen
des brevets

(11) **EP 4 691 732 A1**

(12) **EUROPEAN PATENT APPLICATION**
published in accordance with Art. 153(4) EPC

(43) Date of publication:
**11.02.2026 Bulletin 2026/07**

(21) Application number: **23937466.3**

(22) Date of filing: **16.05.2023**

(51) International Patent Classification (IPC):
*B29C 48/52* (2019.01)          *B29B 7/48* (2006.01)
*B29B 7/72* (2006.01)          *B29B 7/82* (2006.01)
*B29C 48/29* (2019.01)          *B29C 48/30* (2019.01)
*B29C 48/385* (2019.01)          *B29C 48/40* (2019.01)
*B29C 48/53* (2019.01)          *B29C 48/55* (2019.01)
*B29C 48/57* (2019.01)          *B29C 48/645* (2019.01)
*B29C 48/685* (2019.01)          *B29C 48/72* (2019.01)
*B29C 48/80* (2019.01)          *B29C 48/92* (2019.01)

(52) Cooperative Patent Classification (CPC):
**B29B 7/48; B29B 7/72; B29B 7/82; B29C 48/29;**
**B29C 48/30; B29C 48/385; B29C 48/40;**
**B29C 48/52; B29C 48/53; B29C 48/55;**
**B29C 48/57; B29C 48/645; B29C 48/685;**
**B29C 48/72; B29C 48/80;**          (Cont.)

(86) International application number:
**PCT/JP2023/018235**

(87) International publication number:
**WO 2024/236724 (21.11.2024 Gazette 2024/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **The Japan Steel Works, Ltd.**
**Tokyo 141-0032 (JP)**

(72) Inventor: **SAGA, Daigo**
**Tokyo 141-0032 (JP)**

(74) Representative: **Simmons & Simmons LLP**
**(Munich)**
**Lehel Carré**
**Gewürzmühlstraße 11**
**80538 Munich (DE)**

(54) **EXTRUDER**

(57)     The present invention reduces the size of an extruder 10 in a feeding direction. The extruder 10 includes: an upstream part screw 52 that is positioned inside a cylinder 36 and includes a progressive flight 54; and a downstream part screw 62 that is positioned inside a cylinder connected to the cylinder 36. When the valley diameter of the upstream part screw 52 is d1, the mountain diameter thereof is D1, the valley diameter of the downstream part screw 62 is d2, and the ridge diameter thereof is D2, D1/d1 < D2/d2 is established.

FIG. 1

EP 4 691 732 A1

**(Cont. next page)**

(52) Cooperative Patent Classification (CPC): (Cont.)
    **B29C 48/92**

## Description

### TECHNICAL FIELD

The present disclosure relates to an extruder.

### BACKGROUND ART

Patent Document 1 discloses a twin-screw extruder. A pair of screws provided in a cylinder is made up of a transporting section, a kneading section, and a discharge section arranged from an upstream side.

### RELATED ART DOCUMENTS

### PATENT DOCUMENTS

Patent Document 1: Japanese Unexamined Patent Application Publication No. 2009-184303

### SUMMARY OF THE INVENTION

### PROBLEMS TO BE SOLVED BY THE INVENTION

When an extruder includes two cylinders, a pressure needs to be increased in the cylinder located on an upstream side in a conveyance direction of a resin material in order to convey the resin material toward the cylinder on a downstream side. One possible method for increasing the pressure is to increase a length of the cylinder on the upstream side in the conveyance direction, but the size of the extruder in the conveyance direction increases in this case.

Other problems and novel features will be apparent from the description of this specification and accompanying drawings.

### MEANS FOR SOLVING PROBLEMS

An extruder according to one embodiment includes: an upstream screw located in a cylinder on an upstream side and including a conveying section; and a downstream screw located in a cylinder on a downstream side connected to the cylinder on the upstream side, and when a valley radius of the upstream screw is d1, a ridge radius thereof is D1, a valley radius of the downstream screw is d2, and a ridge radius thereof is D2, a relationship of D1/d1 < D2/d2 holds.

### EFFECTS OF THE INVENTION

According to one embodiment of this application, it is possible to reduce a size of an extruder in a conveyance direction as compared with a configuration in which $D1/d1 \geq D2/d2$ holds.

### BRIEF DESCRIPTIONS OF THE DRAWINGS

[FIG. 1] is a partial cross-sectional view illustrating a structure of an extruder according to a first embodiment.
[FIG. 2A] is a cross-sectional view taken along a line A-A in FIG. 1.
[FIG. 2B] is a cross-sectional view taken along a line B-B in FIG. 1.
[FIG. 3] is a cross-sectional view schematically illustrating a ridge radius of a ridge portion and a valley radius of a valley portion of a screw.
[FIG. 4A] is a perspective view illustrating a forward feeding flight of an upstream zone.
[FIG. 4B] is a diagram illustrating the forward feeding flight of the upstream zone seen from a side.
[FIG. 5A] is a perspective view illustrating a forward feeding kneading of the upstream zone.
[FIG. 5B] is a diagram illustrating the forward feeding kneading of the upstream zone seen from a side.
[FIG. 6] is a cross-sectional view illustrating a part of a cross section taken along the line A-A in FIG. 1.
[FIG. 7] is a cross-sectional view illustrating a part of a cross section taken along the line B-B in FIG. 1.
[FIG. 8] is a cross-sectional view illustrating a part of a cross section taken along a line C-C in FIG. 1.
[FIG. 9] is a cross-sectional view illustrating a part of a cross section taken along a line D-D in FIG. 1.
[FIG. 10] is a partial cross-sectional view illustrating a structure of an extruder according to a second embodiment.
[FIG. 11] is a partial cross-sectional view illustrating a structure of an extruder according to a third embodiment.
[FIG. 12A] is a cross-sectional view illustrating a part in which a backward feeding flight is provided in an extruder according to a fourth embodiment.
[FIG. 12B] is a cross-sectional view illustrating a part in which a backward feeding kneading is provided in the extruder according to the fourth embodiment.
[FIG. 13A] is a perspective view illustrating the backward feeding flight in the fourth embodiment.
[FIG. 13B] is a diagram illustrating the backward feeding flight in the fourth embodiment seen from a side.
[FIG. 14A] is a perspective view illustrating the backward feeding kneading in the fourth embodiment.
[FIG. 14B] is a diagram illustrating the backward feeding kneading in the fourth embodiment seen from a side.
[FIG. 15A] is a cross-sectional view illustrating a forward feeding flight in a fifth embodiment.
[FIG. 15B] is a cross-sectional view illustrating a forward feeding flight in a sixth embodiment.
[FIG. 15C] is a cross-sectional view illustrating a forward feeding flight in a seventh embodiment.

[FIG. 16] is a partial cross-sectional view illustrating a structure of an extruder provided with a temperature changing unit according to a modification.

DETAILED DESCRIPTION OF PREFERRED EMBODIMENTS

Hereinafter, each embodiment of the present invention will be described in detail with reference to drawings. The members and devices having the same or substantially same function are denoted by the same reference characters throughout the drawings for describing each embodiment, and the repetitive description thereof will be omitted.

In the following description, a conveyance direction of a resin material P, which will be described later, may be referred to as a Y direction. The Y direction is included in a horizontal direction. An arrow Y in the drawing indicates the Y direction. A base end side of the arrow Y corresponds to an upstream side. A tip end side of the arrow Y corresponds to a downstream side.

Also, a vertical direction perpendicular to the conveyance direction may be referred to as a Z direction. An arrow Z in the drawing indicates the Z direction. A base end side of the arrow Z corresponds to a lower side. A tip end side of the arrow Z corresponds to an upper side.

Further, a left-right direction perpendicular to both the conveyance direction and the vertical direction may be referred to as an X direction. The X direction is included in the horizontal direction. An arrow X in the drawing indicates the X direction. A base end side of the arrow X corresponds to a left side of an extruder 10 when seen from the upstream side to the downstream side in the conveyance direction. A tip end side of the arrow X corresponds to a right side of the extruder 10. The X direction, the Y direction, and the Z direction are perpendicular to each other.

[First Embodiment]

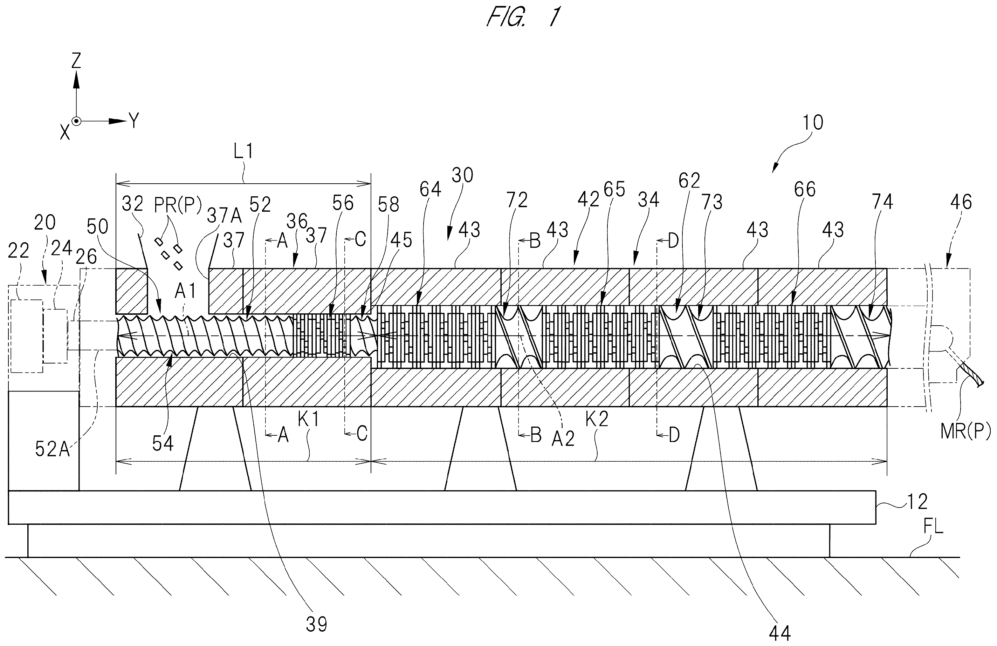

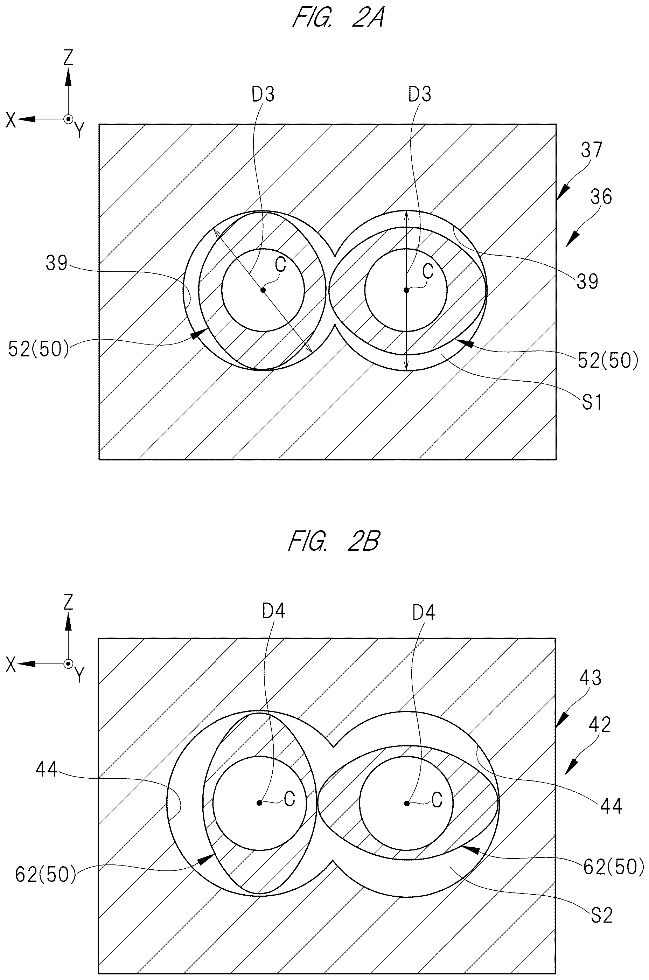

As illustrated in FIG. 1, the extruder 10 according to the first embodiment is used for a melting/kneading process of resin pellets PR which is an example of a resin material P. The extruder 10 is supported on a base 12 which is fixed to a mounting floor FL. The extruder 10 is, for example, a twin-screw extruder provided with two screws 50 (FIG. 2A and FIG. 2B). Specifically, the extruder 10 includes a drive unit 20 that rotates the two screws 50 and a kneading processing unit 30 that includes the two screws 50.

[Drive Unit]

The drive unit 20 includes an electric motor 22 and a decelerator 24. Specifically, a rotational force generated by the electric motor 22 is transmitted to the decelerator 24, and the rotational force decelerated to have a higher torque is transmitted from the decelerator 24 via a gear mechanism 26 or the like to the two screws 50 (FIG. 2A and FIG. 2B) of the kneading processing unit 30. In this way, the two screws 50 are rotated in the same direction. However, the two screws 50 may be rotated in different directions depending on the purpose of the melting/kneading process and others.

[Kneading Processing Unit]

The kneading processing unit 30 includes a hopper 32, a cylinder unit 34, the two screws 50 (FIG. 2A and FIG. 2B), and a discharge section 46.

<Hopper>

The resin pellets PR stored in the hopper 32 descend due to gravity and are supplied to a supply port 37A described later. In the kneading processing unit 30, the side where the resin pellets PR before being melted and kneaded are supplied is the "upstream side". The side where a molten resin MR after being melted and kneaded is discharged from the discharge section 46 is the "downstream side".

<Cylinder Unit>

The cylinder unit 34 is supported by the base 12. The cylinder unit 34 is arranged in parallel to the mounting floor FL. The cylinder unit 34 includes, for example, a cylinder 36 extending in the Y direction and a cylinder 42 connected to the cylinder 36 and extending in the Y direction. In the cylinder unit 34, a range having a radius of D3 (FIG. 2A) is defined as an upstream zone K1. Also, in the cylinder unit 34, a range having a radius of D4 (FIG. 2B) is defined as a downstream zone K2.

The cylinder 36 is made up of, for example, two blocks 37 arranged in the Y direction. A cylindrical upstream conveying path 39 penetrating in the Y direction is formed in each of the two blocks 37. The two upstream conveying paths 39 are arranged in the X direction (FIG. 2A). The block 37 on the upstream side has the supply port 37A. The supply port 37A penetrates from the outside to the upstream conveying path 39.

The cylinder 42 is made up of, for example, four blocks 43 arranged in the Y direction. A cylindrical downstream conveying path 44 penetrating in the Y direction is formed in each of the four blocks 43. The two downstream conveying paths 44 are arranged in the X direction (FIG. 2B). The discharge section 46 from which the molten resin MR is discharged is provided on the downstream side relative to the cylinder 42 in the Y direction.

As illustrated in FIG. 2A, a radius of the cylinder 36 (upstream conveying path 39) is defined as D3 (mm).

As illustrated in FIG. 2B, a radius of the cylinder 42 (downstream conveying path 44) is defined as D4 (mm).

In FIG. 2A and FIG. 2B, the size of the radius D3 is smaller than the size of the radius D4. In other words, in an X-Z cross section perpendicular to the Y direction, a cross-sectional area S1 of the upstream conveying path 39 is smaller than a cross-sectional area S2 of the downstream conveying path 44. A step 45 (FIG. 1) is formed between the block 37 and the block 43. The two upstream conveying paths 39 partially overlap each other at their opposing portions in the X direction, and communicate with each other at the overlapping portions. The two downstream conveying paths 44 partially overlap each other at their opposing portions in the X direction, and communicate with each other at the overlapping portions.

<Screw>

As illustrated in FIG. 1, the two screws 50 (FIG. 2A and FIG. 2B) are arranged in the cylinder 36 and the cylinder 42. The two screws 50 are, for example, double-thread screws. The two screws 50 have a function of conveying the resin material P (resin pellets PR, molten resin MR) present in the upstream conveying path 39 and the downstream conveying path 44 from the upstream side to the downstream side in the Y direction while kneading it.

Note that the positions of the rotation centers of the two screws 50 coincide with the positions of the centers C of the two upstream conveying paths 39 and the positions of the centers C of the two downstream conveying paths 44. Therefore, in the following description, the position of the central axis of the screw 50 will also be referred to as the center C. The two screws 50 can each rotate smoothly without interfering with each other. Hereinafter, the screw 50 on the +X side (right side) will basically be described, and the description of the screw 50 on the -X side (left side) will be omitted.

The screw 50 includes an upstream screw 52 located in the cylinder 36 and a downstream screw 62 located in the cylinder 42. The upstream screw 52 and the downstream screw 62 have the same central axis and are rotated integrally. Note that a range A1 indicated by an arrow in FIG. 1 represents an installation range of the upstream screw 52 in the Y direction. Also, a range A2 indicated by an arrow represents an installation range of the downstream screw 62 in the Y direction. In the present embodiment, as an example, a downstream end of the upstream screw 52 is located in (enters) the cylinder 42, but it is preferable that the boundary position between the upstream screw 52 and the downstream screw 62 is located at the boundary position between the upstream zone K1 and the downstream zone K2.

<<Definitions of Ridge Radius and Valley Radius>>

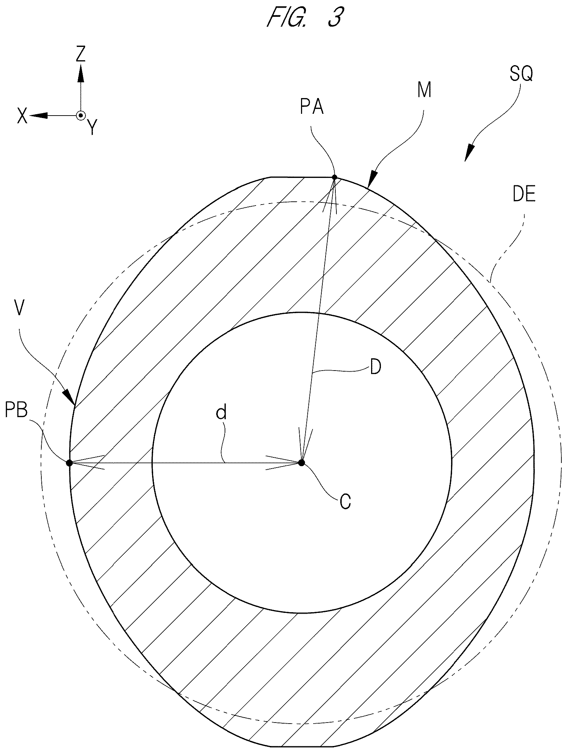

Using a screw SQ schematically illustrated in FIG. 3, the definitions of a "ridge portion", a "valley portion", a "ridge radius", and a "valley radius" of the screw 50 (FIG. 1) in the present embodiment will be described. Note that FIG. 3 illustrates an X-Z cross section of the screw SQ. The axial direction of the screw SQ is along the Y direction. The position of the central axis of the screw SQ is indicated by the center C. The "ridge portion" of the screw SQ is defined as a ridge portion M. The "ridge radius" of the screw SQ is defined as a ridge radius D (mm). The "valley portion" of the screw SQ is defined as a valley portion V. The "valley radius" of the screw SQ is defined as a valley radius d (mm). An imaginary line DE is an imaginary circle having an effective diameter of the screw SR as its diameter.

The "ridge portion M" is a portion located on a radially outer side of the screw SQ with respect to the imaginary line DE when the screw SQ is seen in a cross section (X-Z cross section) perpendicular to the axial direction. The "valley portion V" is a portion located on a radially inner side of the screw SQ with respect to the imaginary line DE.

The "ridge radius D" is a distance D between the center C and a position PA which is the position on the outer peripheral surface of the ridge portion M when the distance from the center C to the outer peripheral surface is at its maximum when seen in the X-Z cross section.

The "ridge radius d" is a distance d between the center C and a position PB which is the position on the outer peripheral surface of the valley portion V when the distance from the center C to the outer peripheral surface is at its minimum when seen in the X-Z cross section.

<<Upstream Screw>>

As illustrated in FIG. 1, the upstream screw 52 includes, for example, a shaft 52A, a forward feeding flight 54 as an example of a conveying section, a forward feeding kneading 56 as an example of a kneading section, and a forward feeding flight 58 as an example of a conveying section.

<<<Forward Feeding Flight>>>

The forward feeding flights 54 and 58 convey the resin material P to the downstream side in the Y direction as they rotate. The length of the forward feeding flight 54 in the Y direction is longer than the length of the forward feeding flight 58 in the Y direction. Note that the forward feeding flight 54 and the forward feeding flight 58 have the same configuration except for the length in the Y direction. Therefore, the forward feeding flight 54 will be described below, and the description of the forward feeding flight 58 will be omitted.

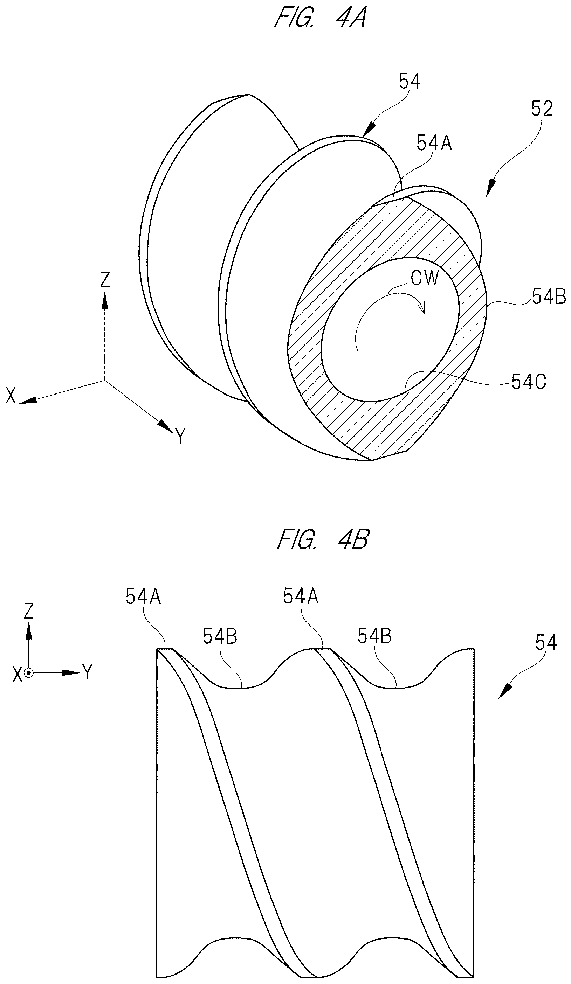

As illustrated in FIG. 4A, the rotation direction of the upstream screw 52 is set to the clockwise direction indicated by an arrow CW. As illustrated in FIG. 4B, the forward feeding flight 54 is formed in a right-hand thread shape provided with spiral ridge portion 54A and valley portion 54B such that the resin material P (FIG. 1) moves in the Y direction (forward direction). As illustrated in FIG. 4A, a fixing hole 54C through which the shaft 52A (FIG. 1) is inserted is provided in the rotation center of the forward feeding flight 54. The shaft 52A is serration-fitted into the fixing hole 54C so as to be able to transmit large torque.

<<<Forward Feeding Kneading>>>

As illustrated in FIG. 1, the forward feeding kneading 56 kneads the resin material P as it rotates. In addition, the forward feeding kneading 56 also has a function of conveying the resin material P to the downstream side while kneading it.

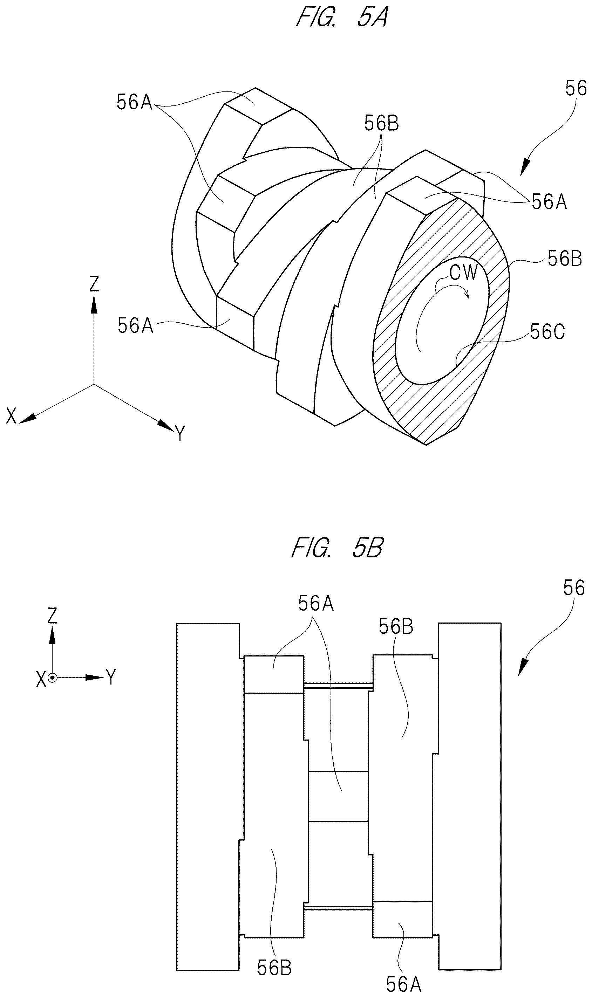

As illustrated in FIG. 5A and FIG. 5B, the forward feeding kneading 56 is formed in a shape in which a plurality of ridge portions 56A and valley portions 56B are arranged in a spiral shape such that the resin material P (FIG. 1) is conveyed in the Y direction (forward direction) while being kneaded. Also, a fixing hole 56C (FIG. 5A) through which the shaft 52A (FIG. 1) is inserted is provided in the rotation center of the forward feeding kneading 56. The shaft 52A is serration-fitted into the fixing hole 56C so as to be able to transmit large torque.

<<Downstream Screw>>

As illustrated in FIG. 1, the downstream screw 62 includes the shaft 52A, forward feeding kneadings 64, 65, and 66 as an example of a kneading section, and forward feeding flights 72, 73, and 74 as an example of an other conveying section. The forward feeding kneadings 64, 65, and 66 and the forward feeding flights 72, 73, and 74 are alternately arranged in the Y direction.

<<<Forward Feeding Kneading>>>

The forward feeding kneading 64 is located on the downstream side in the Y direction relative to the forward feeding flight 58. The forward feeding kneadings 64, 65, and 66 knead the resin material P as they rotate. In addition, the forward feeding kneadings 64, 65, and 66 also have a function of conveying the resin material P to the downstream side while kneading it. The forward feeding kneadings 64, 65, and 66 are members having an external shape similar to that of the forward feeding kneading 56, but have dimensions different from those of the forward feeding kneading 56. The forward feeding kneadings 64, 65, and 66 are fixed to the shaft 52A like the forward feeding kneading 56.

<<<Forward Feeding Flight>>>

The forward feeding flights 72, 73, and 74 convey the resin material P to the downstream side in the Y direction as they rotate. The forward feeding flights 72, 73, and 74 each have different lengths in the Y direction. The forward feeding flights 72, 73, and 74 are members having an external shape similar to that of the forward feeding flight 54, but have dimensions different from those of the forward feeding flight 54. The forward feeding flights 72, 73, and 74 are fixed to the shaft 52A like the forward feeding flight 54.

[Valley Radius and Ridge Radius of Forward Feeding Flight]

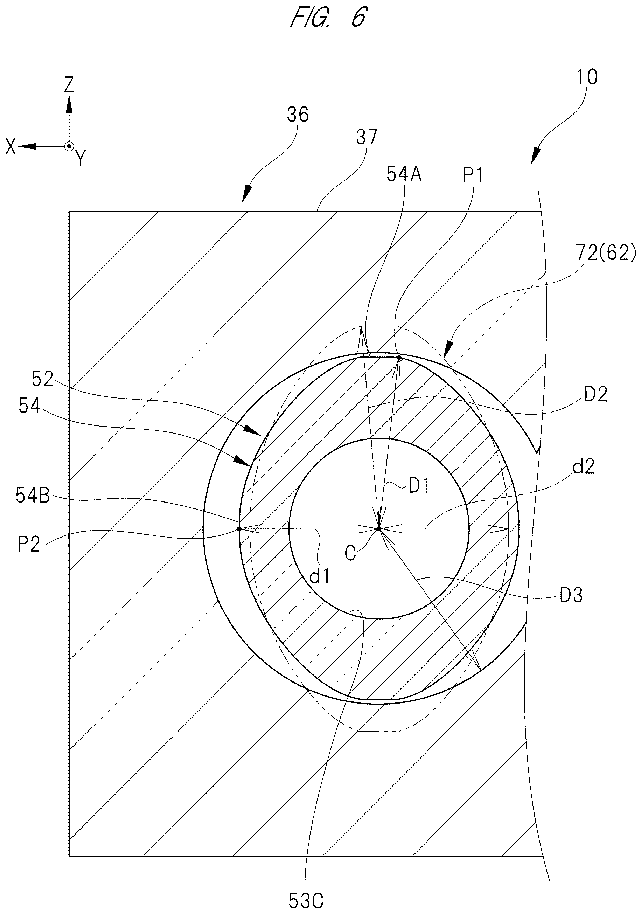

As illustrated in FIG. 6, in the upstream screw 52, the forward feeding flight 54 has the ridge portion 54A and the valley portion 54B. The ridge portion 54A refers to a portion located on a radially outer side with respect to an imaginary circle having an effective diameter of the upstream screw 52 as its diameter. The valley portion 54B refers to a portion located on a radially inner side with respect to the imaginary circle having the effective diameter of the upstream screw 52 as its diameter. In FIG. 6, for the sake of comparison, the forward feeding flight 54 is indicated by a solid line, and the forward feeding flight 72 which will be described later is indicated by a double-dot dashed line.

A ridge radius D1 (mm) of the forward feeding flight 54 is a distance between the center C and a position P1 which is the position on the outer peripheral surface of the ridge portion 54A when the distance from the center C to the outer peripheral surface is at its maximum when seen in the X-Z cross section.

A valley radius d1 (mm) of the forward feeding flight 54 is a distance between the center C and a position P2 which is the position on the outer peripheral surface of the valley portion 54B when the distance from the center C to the outer peripheral surface is at its minimum when seen in the X-Z cross section.

Further, the radius of the cylinder 36 is defined as D3 (mm). Here, the ratio of the ridge radius D1 to the valley radius d1 is defined as R1 (=D1/d1). Also, the ratio of the radius D3 of the cylinder 36 to the valley radius d1 is defined as R3 (=D3/d1). The illustrations of the ratio R1 and the ratio R3 are omitted.

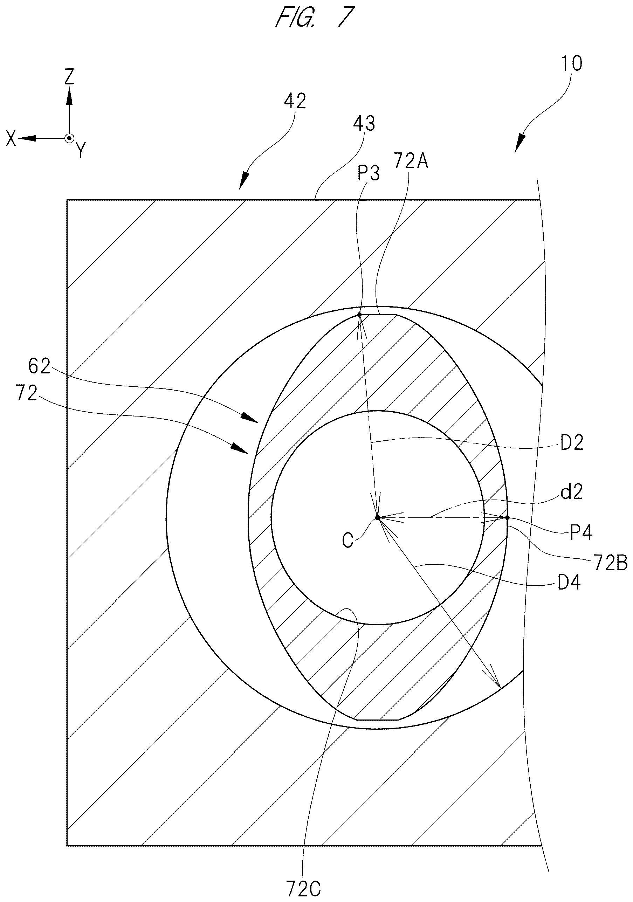

As illustrated in FIG. 7, in the downstream screw 62, the forward feeding flight 72 has a ridge portion 72A and a valley portion 72B. The ridge portion 72A refers to a portion located on a radially outer side with respect to an imaginary circle having an effective diameter of the downstream screw 62 as its diameter. The valley portion 72B refers to a portion located on a radially inner side with respect to the imaginary circle having the effective diameter of the downstream screw 62 as its diameter.

A ridge radius D2 (mm) of the forward feeding flight 72 is a distance between the center C and a position P3 which is the position on the outer peripheral surface of the ridge portion 72A when the distance from the center C to the outer peripheral surface is at its maximum when seen in the X-Z cross section.

A valley radius d2 (mm) of the forward feeding flight 72 is a distance between the center C and a position P4 which is the position on the outer peripheral surface of the valley portion 72B when the distance from the center C to the outer peripheral surface is at its minimum when seen in the X-Z cross section.

Further, the radius of the cylinder 42 is defined as D4 (mm). Here, the ratio of the ridge radius D2 to the valley radius d2 is defined as R2 (=D2/d2). Also, the ratio of the radius D4 of the cylinder 42 to the valley radius d2 is defined as R4 (=D4/d2). The illustrations of the ratio R2 and the ratio R4 are omitted.

As illustrated in FIG. 6, when the forward feeding flight 54 and the forward feeding flight 72 are compared, the relationship of D1/d1 < D2/d2 holds, and the relationship of D3/d1 < D4/d2 also holds. In other words, the ratio R1 is smaller than the ratio R2, and the ratio R3 is smaller than the ratio R4.

[Valley Radius and Ridge Radius of Forward feeding kneading]

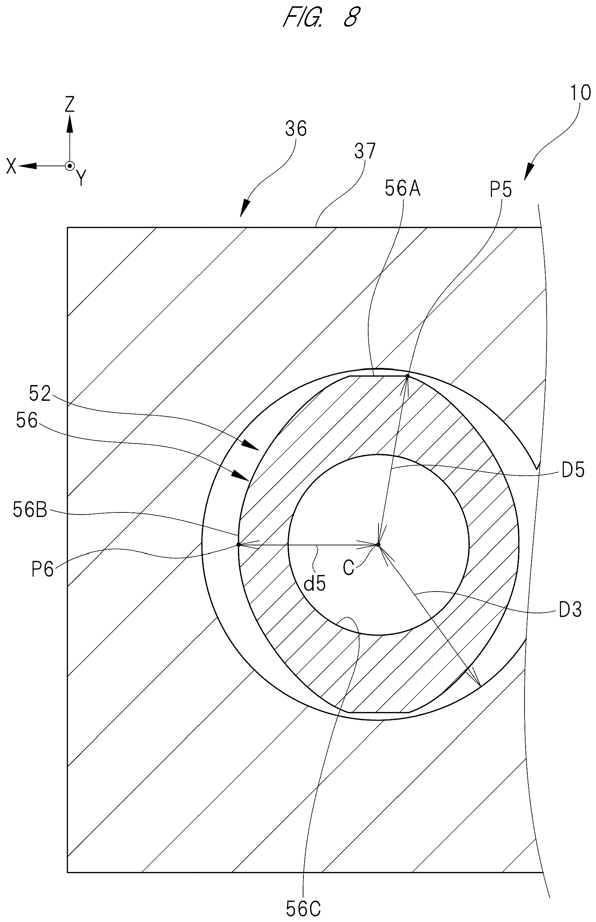

As illustrated in FIG. 8, in the upstream screw 52, the forward feeding kneading 56 has the ridge portion 56A and the valley portion 56B. The ridge portion 56A refers to a portion located on a radially outer side with respect to an imaginary circle having an effective diameter of the upstream screw 52 as its diameter. The valley portion 56B refers to a portion located on a radially inner side with respect to the imaginary circle having the effective diameter of the upstream screw 52 as its diameter.

A ridge radius D5 (mm) of the forward feeding kneading 56 is a distance between the center C and a position P5 which is the position on the outer peripheral surface of the ridge portion 56A when the distance from the center C to the outer peripheral surface is at its maximum when seen in the X-Z cross section.

A valley radius d5 (mm) of the forward feeding kneading 56 is a distance between the center C and a position P6 which is the position on the outer peripheral surface of the valley portion 56B when the distance from the center C to the outer peripheral surface is at its minimum when seen in the X-Z cross section.

Here, the ratio of the ridge radius D5 to the valley radius d5 is defined as R5 (=D5/d5). Also, the ratio of the radius D3 to the valley radius d5 is defined as R6 (=D3/d5). The illustrations of the ratio R5 and the ratio R6 are omitted. In the present embodiment, as an example, R5 is equal to R1 (R5 = R1) and R6 is equal to R3 (R6 = R3).

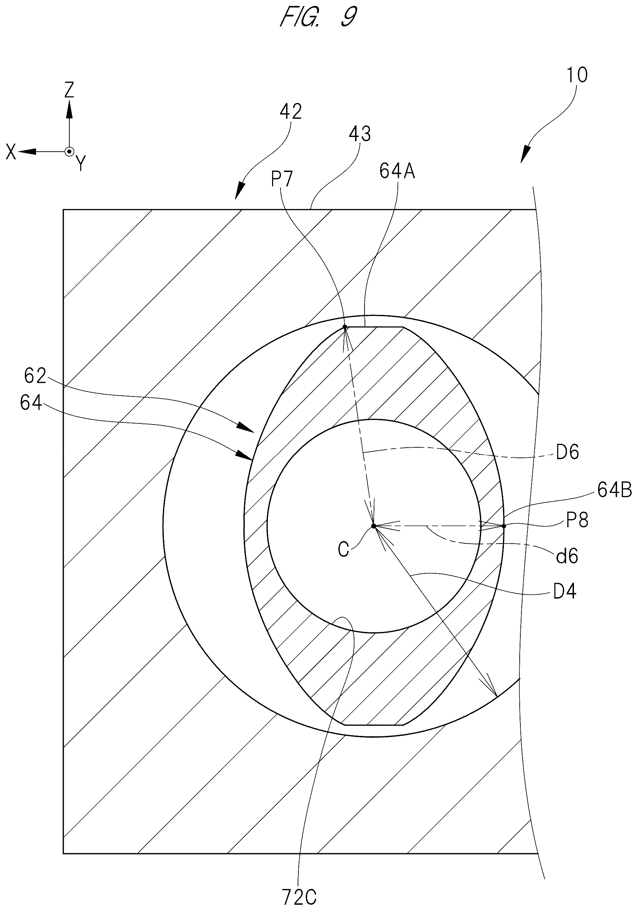

As illustrated in FIG. 9, in the downstream screw 62, the forward feeding kneading 64 has a ridge portion 64A and a valley portion 64B. The ridge portion 64A refers to a portion located on a radially outer side with respect to an imaginary circle having an effective diameter of the downstream screw 62 as its diameter. The valley portion 64B refers to a portion located on a radially inner side with respect to the imaginary circle having the effective diameter of the downstream screw 62 as its diameter.

A ridge radius D6 (mm) of the forward feeding kneading 64 is a distance between the center C and a position P7 which is the position on the outer peripheral surface of the ridge portion 64A when the distance from the center C to the outer peripheral surface is at its maximum when seen in the X-Z cross section.

A valley radius d6 (mm) of the forward feeding kneading 64 is a distance between the center C and a position P8 which is the position on the outer peripheral surface of the valley portion 64B when the distance from the center C to the outer peripheral surface is at its minimum when seen in the X-Z cross section.

Here, the ratio of the ridge radius D6 to the valley radius d6 is defined as R7 (=D6/d6). Also, the ratio of the radius D4 to the valley radius d6 is defined as R8 (=D4/d6). The illustrations of the ratio R7 and the ratio R8 are omitted. In the present embodiment, as an example, R7 is equal to R2 (R7 = R2) and R8 is equal to R4 (R8 = R4). Namely, in the forward feeding kneading 56 (FIG. 8) and the forward feeding kneading 64, the relationship in which the ratio R5 is smaller than the ratio R7 and the ratio R6 is smaller than the ratio R8 holds. In this way, the relationship similar to that of the forward feeding flights 54 and 72 (FIG. 1) holds also in the forward feeding kneadings 56 and 64.

As described above, in the extruder 10, D1/d1 < D2/d2 holds when the valley radius of the upstream screw 52 is d1, the ridge radius thereof is D1, the valley radius of the downstream screw 62 is d2, and the ridge radius thereof is D2. Furthermore, D3/d1 < D4/d2 holds when the radius of the cylinder 36 is D3 and the radius of the cylinder 42 is D4. In the extruder 10, each value is set such that D1/d1 is less than 1.5. In other words, each value is set such that D2/d2 is equal to or larger than 1.5.

[Function of First Embodiment]

The function of the extruder 10 according to the first embodiment will be described with reference to FIG. 1 to FIG. 9. In the extruder 10, the ratio R1 (=D1/d1) of the upstream screw 52 in the upstream zone K1 is smaller than the ratio R2 (=D2/d2) of the downstream screw 62 in the downstream zone K2. Accordingly, the spatial volume in the upstream zone K1 is smaller than the spatial volume in the downstream zone K2, and the pressure increasing ability in the upstream zone K1 becomes higher, so that the required pressure can be obtained in the upstream zone K1 even if the length of the upstream zone K1 in the Y direction is set to a short length. As a result, it is possible to reduce the size of the extruder 10 in the conveyance direction (Y direction) as compared with the configuration in which D1/d1 ≥ D2/d2 holds.

As the spatial volume in the upstream zone K1 becomes smaller and the pressure increasing ability becomes higher, the filling rate of the resin material P in the upstream zone K1 increases and the conveying ability of the resin material P also becomes higher. This suppresses the resin pressure and volatile gas generated during the kneading in the downstream zone K2 from flowing back to the upstream zone K1, so that the extruder 10 can be operated stably and continuously.

Here, the length of the upstream zone K1 in the Y direction is defined as L1 (mm) (FIG. 1). When the length L1 is too short, the sufficient pressure increasing ability may not be obtained. The pressure increasing ability required in the upstream zone K1 depends on the internal pressure in the downstream zone K2, but a ratio RA of the length L1 to the inner diameter (= 2 × radius D3) of the cylinder 36 (= L1/(2 × D3)) needs to be 1.5 or more. The ratio RA is preferably equal to or larger than 7.0.

In the extruder 10, in addition to the relationship of D1/d1 < D2/d2, the relationship of D3/d1 < D4/d2 also holds. Therefore, the spatial volume is set within a preferred range by taking into consideration not only the radius of the screw 50 but also the radius of the cylinder unit 34. This makes it possible to further suppress the resin pressure and volatile gas generated during the kneading in the downstream zone K2 from flowing back to the upstream zone K1.

In the extruder 10, the downstream screw 62 includes the forward feeding kneadings 64, 65, and 66. Therefore, as compared with the configuration in which the downstream screw 62 includes only the forward feeding flights 72, 73, and 74, the resin material P can be heated by heat generated by the shearing action due to the rotation of the screw 50.

In the extruder 10, the downstream screw 62 includes the forward feeding flights 72, 73, and 74. Therefore, as compared with the configuration in which the downstream screw 62 includes only the forward feeding kneadings 64, 65, and 66, the conveying ability of the resin material P can be improved.

In the extruder 10, the upstream screw 52 includes the forward feeding kneading 56. Therefore, as compared with the configuration in which the upstream screw 52 includes only the forward feeding flight 54, the resin material P can be heated by heat generated by the shearing action due to the rotation of the screw 50.

[Second Embodiment]

An extruder 80 according to the second embodiment of the present disclosure will be described with reference to the drawings. For the same or similar components as those of the extruder 10 according to the first embodiment, the same reference characters are applied and the descriptions thereof will be omitted.

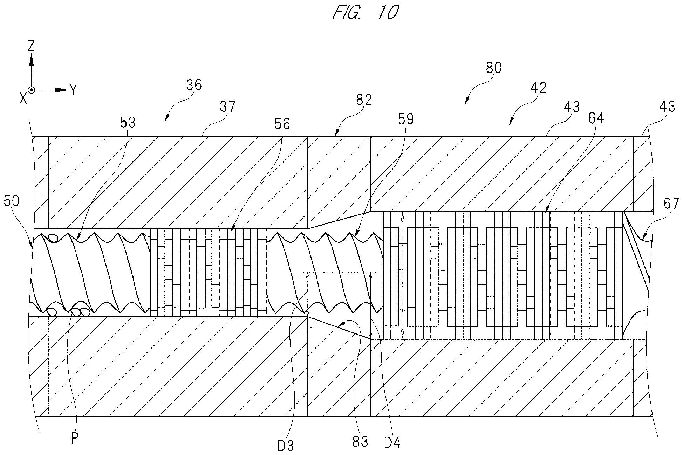

FIG. 10 illustrates a part of the extruder 80 in the Y direction. The extruder 80 differs from the extruder 10 (FIG. 1) in that an adapter 82 is added to the cylinder 36. The configuration other than the adapter 82 is the same except for the length of the screw 50 in the Y direction.

The adapter 82 is provided at a downstream end of the cylinder 36 in the conveyance direction (Y direction) of the resin material P. The adapter 82 is an example of a diameter enlarging section. The adapter 82 has a hole 83 constituting a part of the conveying path of the resin material P. The shape of the hole 83 in the X-Z cross section is a circular shape. The radius of the upstream end of the hole 83 in the Y direction is D3. The radius of the downstream end of the hole 83 in the Y direction is D4. In the hole 83, the radius continuously increases from D3 to D4 toward the cylinder 42. In other words, the inner diameter of the hole 83 increases continuously toward the cylinder 42.

In the extruder 80, the radius of the adapter 82 increases continuously from D3 to D4. In other words, no step is formed. In this way, since it is possible to suppress a part of the resin material P conveyed in the Y direction from remaining in the step portion, the resin material P can be conveyed smoothly from the cylinder 36 to the cylinder 42.

[Third Embodiment]

An extruder 90 according to the third embodiment of the present disclosure will be described with reference to the drawings. For the same or similar components as those of the extruder 10 according to the first embodiment, the same reference characters are applied and the descriptions thereof will be omitted.

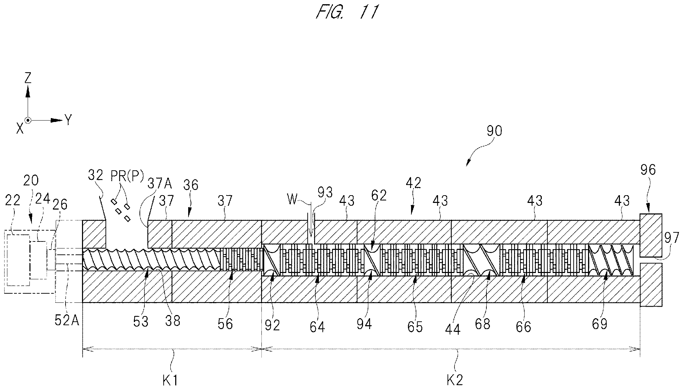

FIG. 11 illustrates the extruder 90. The extruder 90 differs from the extruder 10 (FIG. 1) in that forward feeding flights 92 and 94 are added to the downstream screw 62, a flow path 93 is provided in the first block 43 (cylinder 42), and a pressure adjustment section 96 is provided in place of the discharge section 46 (FIG. 1).

The flow path 93 penetrates the block 43 in the Z direction and communicates with the downstream conveying path 44. In the flow path 93, water W is supplied as an example of a liquid material. As another example of the liquid material, a liquid resin or the like may be used instead of the water W.

The pressure adjustment section 96 is provided on the downstream side relative to the cylinder 42. The pressure adjustment section 96 has, for example, a hole 97 having a radius smaller than the radius D3 (FIG. 6). The hole 97 extends in the Y direction. The pressure adjustment section 96 can adjust the pressure inside the cylinder 42 by changing the size of the radius (inner diameter) of the hole 97.

In the extruder 90, the resin material P is supplied in the upstream zone K1, and the water W is supplied in the downstream zone K2. Here, since the above-described relationship of the ridge radius and the valley radius holds, the pressure increasing ability is improved in the upstream zone K1. This improves the sealing ability in the upstream zone K1 against the resin material P, the water W, and the gas generated by kneading present in the downstream zone K2, so that it is possible to suppress the backflow from the downstream zone K2 to the upstream zone K1. In addition, since there is no need to increase the number of blocks 37 in order to suppress the backflow, it is possible to reduce the size of the extruder 90 in the conveyance direction (Y direction).

[Fourth Embodiment]

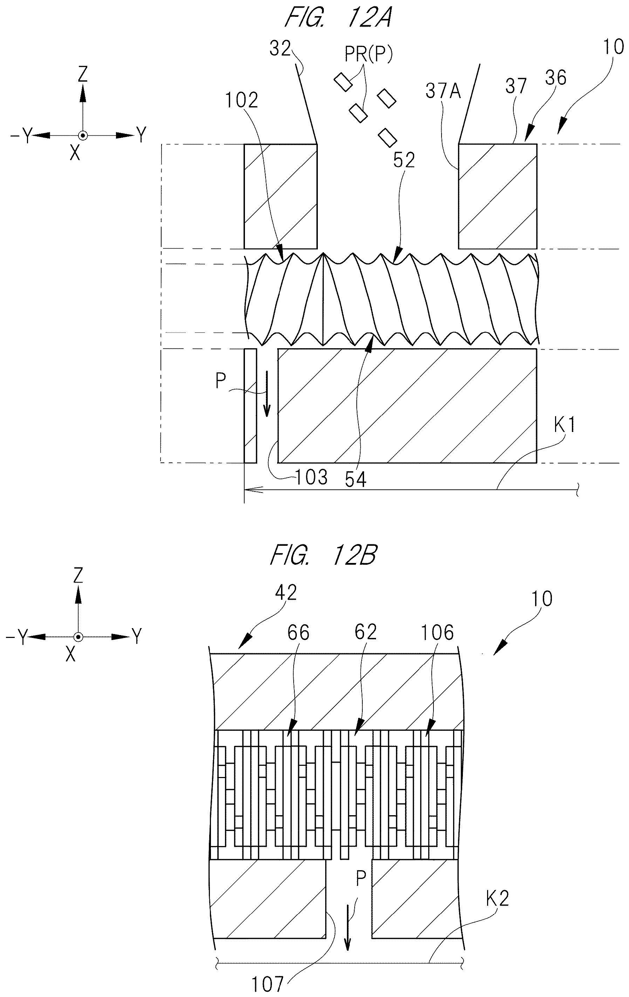

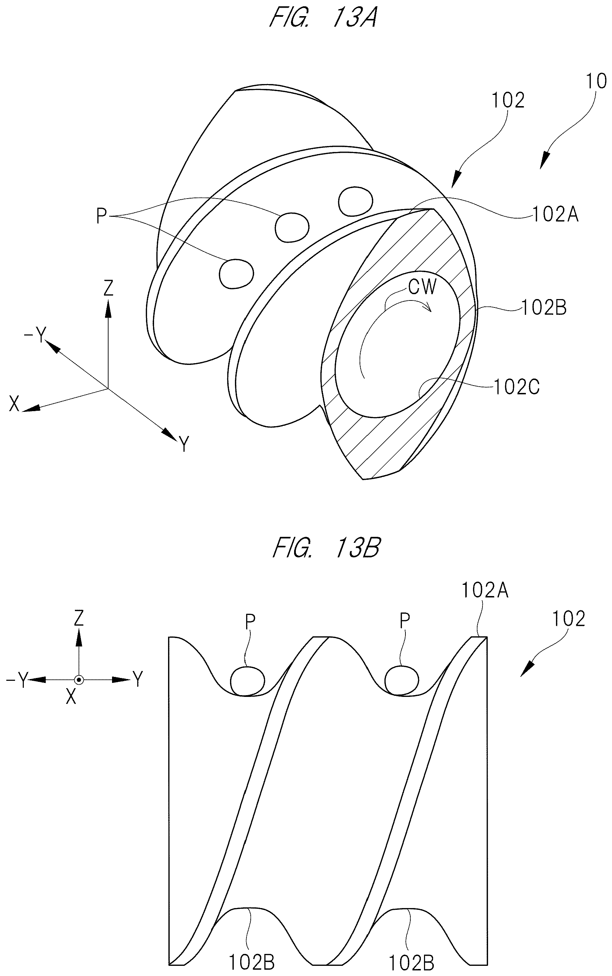

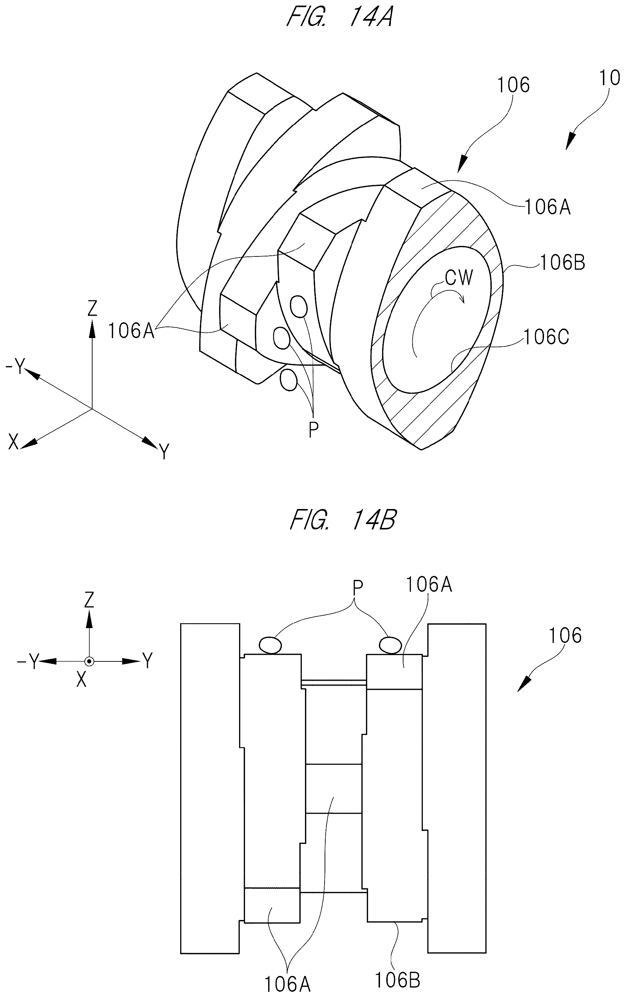

FIG. 12A and FIG. 12B illustrate, as the fourth embodiment of the present disclosure, a configuration in which a backward feeding flight 102 and a backward feeding kneading 106 are added to the extruder 10. FIG. 13A and FIG. 13B illustrate the backward feeding flight 102. FIG. 14A and FIG. 14B illustrate the backward feeding kneading 106. For the same or similar components as those of the extruder 10 according to the first embodiment, reference will be made to FIG. 1, the description of the figure numbers will be omitted, and the same reference characters are applied and the descriptions thereof will be omitted.

As illustrated in FIG. 13A and FIG. 13B, when the rotation direction is set to the direction indicated by an arrow CW (FIG. 13A), the backward feeding flight 102 is formed in a thread shape provided with spiral ridge portion 102A and valley portion 102B such that the resin material P moves in the direction of an arrow -Y (backward direction). The backward feeding flight 102 is an example of a backward conveying section. Also, a fixing hole 102C (FIG. 13A) through which the shaft 52A is inserted is provided in the rotation center of the backward feeding flight 102. The shaft 52A is serration-fitted into the fixing hole 102C so as to be able to transmit large torque.

As illustrated in FIG. 12, for example, the backward feeding flight 102 is provided at an upstream end of the upstream screw 52 in the Y direction. Further, a discharge port 103 is provided at an upstream end of the upstream zone K1 of the extruder 10. Here, as the upstream screw 52 rotates, the backward feeding flight 102 is rotated, whereby the resin material P remaining on the upstream side relative to the supply port 37A can be discharged from the discharge port 103.

As illustrated in FIG. 14A and FIG. 14B, when the rotation direction is set to the direction indicated by an arrow CW (FIG. 14A), the backward feeding kneading 106 is formed in a shape provided with a plurality of ridge portions 106A arranged spirally such that the resin material P moves in the direction of an arrow -Y (backward direction). The backward feeding kneading 106 is an example of a kneading section and an example of a backward conveying section. Also, the backward feeding kneading 106 has a plurality of valley portions 106B. Further, a fixing hole 106C (FIG. 14A) through which the shaft 52A is inserted is provided in the rotation center of the backward feeding kneading 106. The shaft 52A is serration-fitted into also the fixing hole 106C so as to be able to transmit large torque.

As illustrated in FIG. 12B, for example, the backward feeding kneading 106 is provided at a downstream end of the downstream screw 62 in the Y direction. Further, a discharge port 107 is provided in a part of the downstream zone K2 of the extruder 10. Here, as the downstream screw 62 rotates, the backward feeding kneading 106 is rotated, whereby the resin material P remaining on the upstream side relative to the discharge section 46 (FIG. 1) of the downstream zone k2 can be discharged from the discharge port 107. The extruder 10 provided with the backward feeding flight 102 and the backward feeding kneading 106 may be used as described above.

[Fifth Embodiment]

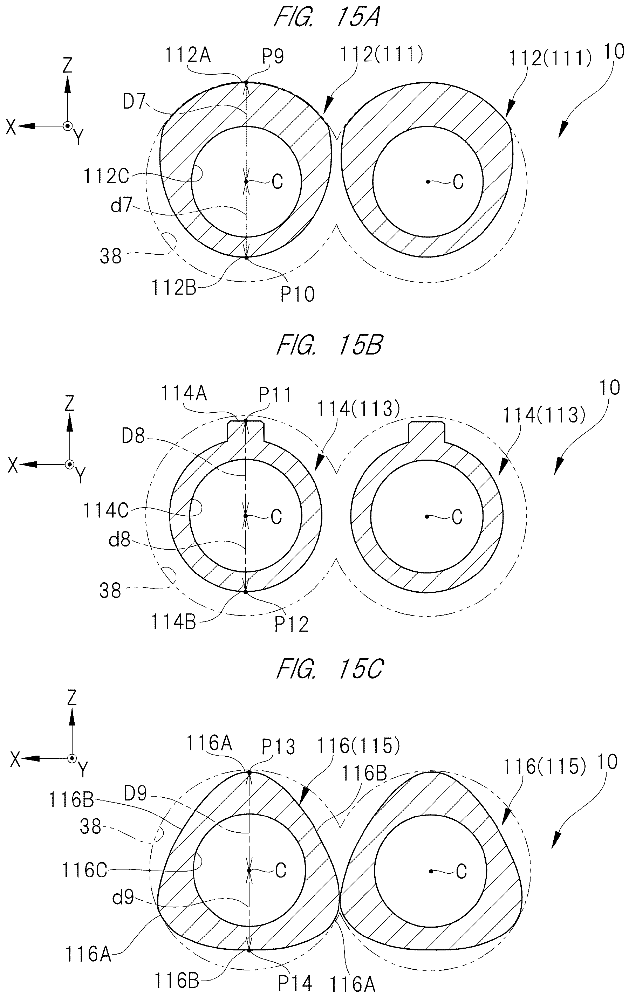

FIG. 15A illustrates a forward feeding flight 112 as the fifth embodiment of the present disclosure. For the same or similar components as those of the extruder 10 according to the first embodiment, the same reference characters are applied and the descriptions thereof will be omitted.

The forward feeding flight 112 is an example of a conveying section. The forward feeding flight 112 constitutes a single-thread screw 111 and has a ridge portion 112A and a valley portion 112B. In the forward feeding flight 112, the valley portion 112B having a valley radius d7 and the ridge portion 112A having a ridge radius D7 are arranged in the radial direction of the screw 111. A fixing hole 112C through which the shaft 52A (FIG. 1) is inserted is provided in the rotation center of the forward feeding flight 112.

The ridge portion 112A refers to a portion located on a radially outer side with respect to an imaginary circle having an effective diameter of the screw 111 as its diameter. The valley portion 112B refers to a portion located on a radially inner side with respect to the imaginary circle having the effective diameter of the screw 111 as its diameter.

The ridge radius D7 (mm) of the forward feeding flight 112 is a distance between the center C and a position P9 which is the position on the outer peripheral surface of the ridge portion 112A when the distance from the center C to the outer peripheral surface is at its maximum when seen in the X-Z cross section.

The valley radius d7 (mm) of the forward feeding flight 112 is a distance between the center C and a position P10 which is the position on the outer peripheral surface of the valley portion 112B when the distance from the center C to the outer peripheral surface is at its minimum when seen in the X-Z cross section.

Note that a ratio R9 (=D7/d7) of the ridge radius D7 to the valley radius d7 of the forward feeding flight 112 is smaller than the ratio R2 of the downstream screw 62 (FIG. 7). Thus, it is possible to reduce the size of the extruder 10 even when the single-thread forward feeding flight 112 is used. The illustration of the ratio R9 is omitted.

[Sixth Embodiment]

FIG. 15B illustrates a forward feeding flight 114 as the sixth embodiment of the present disclosure. For the same or similar components as those of the extruder 10 according to the first embodiment, the same reference characters are applied and the descriptions thereof will be omitted.

The forward feeding flight 114 is an example of a conveying section. The forward feeding flight 114 constitutes a single-thread screw 113 and has a ridge portion 114A and a valley portion 114B. A fixing hole 114C through which the shaft 52A (FIG. 1) is inserted is provided in the rotation center of the forward feeding flight 114.

The ridge portion 114A refers to a portion located on a radially outer side with respect to an imaginary circle having an effective diameter of the screw 113 as its diameter. The valley portion 114B refers to a portion located on a radially inner side with respect to the imaginary circle having the effective diameter of the screw 113 as its diameter. The valley portion 114B is provided in a circular ring shape when seen in the axial direction of the screw 113 (Y direction). The ridge portion 114A is a protruding portion that protrudes from a part of the valley portion 114B in the circumferential direction to a radially outer side.

A ridge radius D8 (mm) of the forward feeding flight 114 is a distance between the center C and a position P11 which is the position on the outer peripheral surface of the ridge portion 114A when the distance from the center C to the outer peripheral surface is at its maximum when seen in the X-Z cross section.

A valley radius d8 (mm) of the forward feeding flight 114 is a distance between the center C and a position P12 which is the position on the outer peripheral surface of the valley portion 114B when the distance from the center C to the outer peripheral surface is at its minimum when seen in the X-Z cross section.

Note that a ratio R10 (=D8/d8) of the ridge radius D8 to the valley radius d8 of the forward feeding flight 114 is smaller than the ratio R2 of the downstream screw 62 (FIG. 7). Thus, it is possible to reduce the size of the extruder 10 even when the single-thread forward feeding flight 114 is used. The illustration of the ratio R10 is omitted.

[Seventh Embodiment]

FIG. 15C illustrates a forward feeding flight 116 as the seventh embodiment of the present disclosure. For the same or similar components as those of the extruder 10 according to the first embodiment, the same reference characters are applied and the descriptions thereof will be omitted.

The forward feeding flight 116 is an example of a conveying section. The forward feeding flight 116 constitutes a triple-thread screw 115 and has three ridge portions 116A and three valley portions 116B. The three ridge portions 116A and the three valley portions 116B are arranged in the circumferential direction of the screw 115. In other words, a plurality of ridge portions 116A and valley portions 116B are provided in the circumferential direction of the screw 115. A fixing hole 116C through which the shaft 52A (FIG. 1) is inserted is provided in the rotation center of the forward feeding flight 116.

The ridge portion 116A refers to a portion located on a radially outer side with respect to an imaginary circle having an effective diameter of the screw 115 as its diameter. The valley portion 116B refers to a portion located on a radially inner side with respect to the imaginary circle having the effective diameter of the screw 115 as its diameter.

A ridge radius D9 (mm) of the forward feeding flight 116 is a distance between the center C and a position P13 which is the position on the outer peripheral surface of the ridge portion 116A when the distance from the center C to the outer peripheral surface is at its maximum when seen in the X-Z cross section.

A valley radius d9 (mm) of the forward feeding flight 116 is a distance between the center C and a position P14 which is the position on the outer peripheral surface of the valley portion 116B when the distance from the center C to the outer peripheral surface is at its minimum when seen in the X-Z cross section.

A ratio R11 (=D9/d9) of the ridge radius D9 to the valley radius d9 of the forward feeding flight 116 is smaller than the ratio R2 of the downstream screw 62 (FIG. 7). Thus, it is possible to reduce the size of the extruder 10 (FIG. 1) even when the triple-thread forward feeding flight 116 is used. The illustration of the ratio R11 is omitted.

[Modifications]

It goes without saying that the present disclosure is not limited to the above-described embodiments, and various modifications are possible within the range not departing from the gist of the disclosure. For example, in each of the above embodiments, a "twin-screw extruder" including two (a pair of) screws 50 has been described, but the present disclosure is not limited to this and can also be applied to an extruder including one screw (single-screw extruder).

The extruder 10 may have the configuration in which only the relationship of D1/d1 < D2/d2 holds and the relationship of D3/d1 < D4/d2 does not hold.

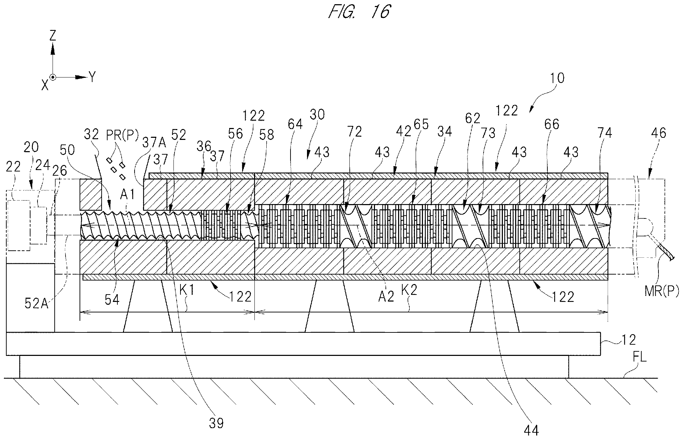

As illustrated in FIG. 16, the the extruder 10 and others may be provided with a temperature changing unit 122 in each of the block 37 (cylinder 36) and the block 43 (cylinder 42). The temperature changing unit 122 includes at least one of a cooling unit that cools the resin material P and a heating unit that heats the resin material P. The number of cooling units and the number of heating units may be single or multiple. As an example of the cooling unit, a pipe through which a liquid such as water flows may be provided and cooling may be performed by heat exchange in the pipe. As an example of the heating unit, a heater may be provided and heating may be performed by generating heat through electrical conduction.

Moreover, the temperature changing unit 122 may be provided only in the cylinder 36. The temperature changing unit 122 may be provided only in the cylinder 42.

In the extruder 10, only the forward feeding flight 54 may be provided in the upstream zone K1. Only the forward feeding flight 72 may be provided in the downstream zone K2. Only the forward feeding kneading 64 may be provided in the downstream zone K2. Only the forward feeding flight 54 may be provided in the upstream zone K1, and only the forward feeding flight 72 may be provided in the downstream zone K2. Only the forward feeding flight 54 may be provided in the upstream zone K1, and only the forward feeding kneading 64 may be provided in the downstream zone K2.

Only the forward feeding flight 54 may be provided in the upstream zone K1, and the forward feeding kneading 64 and the forward feeding flight 72 may be provided in the downstream zone K2. Only the forward feeding flight 54 and the forward feeding kneading 56 may be provided in the upstream zone K1.

The adapter 82 may be added to the extruder 90.

In addition, any material, shape, size, number, installation positions of each component in each of the above embodiments are applicable as long as the present disclosure can be achieved, and are not limited to the above embodiments and modifications.

REFERENCE SIGNS LIST

10 extruder, 12 base, 20 drive unit, 22 electric motor, 24 decelerator, 26 gear mechanism, 30 kneading processing unit, 32 hopper, 34 cylinder unit, 36 cylinder, 37 block, 37A supply port, 39 upstream conveying path, 42 cylinder, 43 block, 44 downstream conveying path, 45 step, 46 discharge section, 50 screw, 52 upstream screw, 52A shaft, 54 forward feeding flight (one example of conveying section), 54A ridge portion, 54B valley portion, 54C fixed hole, 56 forward feeding kneading (one example of kneading section), 56A ridge portion, 56B valley portion, 56C fixing hole, 58 forward feeding flight (one example of conveying section), 62 downstream screw, 64 forward feeding kneading (one example of kneading section), 64A ridge portion, 64B valley portion, 65 forward feeding kneading (one example of kneading section), 66 forward feeding kneading (one example of kneading section), 72 forward feeding flight (one example of an other conveying section), 72A ridge portion, 72B valley portion, 73 forward feeding flight (one example of an other conveying section), 74 forward feeding flight (one example of an other conveying section), 80 extruder, 82 adapter (one example of diameter enlarging section), 83 hole, 90 extruder, 92 forward feeding flight, 93 flow path, 94 forward feeding flight, 96 pressure adjustment section, 102 backward feeding flight (one example of backward conveying section), 102A ridge portion, 102B valley portion, 102C fixing hole, 103 discharge port, 106 backward feeding kneading (one example of kneading section and one example of an other backward conveying section), 106A ridge portion, 106B valley portion, 106C fixing hole, 107 discharge port, 111 screw, 112 forward feeding flight (one example of conveying section), 112A ridge portion, 112B valley portion, 112C fixing hole, 113 screw, 114 forward feeding flight (one example of conveying section), 114A ridge portion, 114B valley portion, 114C fixing hole, 115 screw, 116 forward feeding flight (one example of conveying section), 116A ridge portion, 116B valley portion, 116C fixing hole, 122 temperature changing unit, A1 range, A2 range, C center, CW rotation direction, d valley radius, d1 valley radius, d2 valley radius, d5 valley radius, d6 valley radius, D ridge radius, D1 ridge radius, D2 ridge radius, D3 radius, D4 radius, D5 ridge radius, D6 ridge radius, DE imaginary line, FL mounting floor, K1 upstream zone, K2 downstream zone, L1 length, M ridge portion, MR molten resin, P resin material, P1 position, P2 position, P3 position, P4 position, P5 position, P6 position, P7 position, P8 position, P9 position, P10 position, P11 position, P12 position, P13 position, P14 position, PA position, PB position, PR resin pellet, R1 ratio, R2 ratio, R3 ratio, R4 ratio, R5 ratio, R6 ratio, R7 ratio, R8 ratio, R9 ratio, R10 ratio, R11 ratio, S1 cross-sectional area, S2 cross-sectional area, SQ screw, V valley portion, W water, Y conveyance direction, Z vertical direction

**Claims**

1. An extruder comprising:

   a first cylinder having a supply port to which a resin material is supplied;
   a first screw located in the first cylinder and including a conveying section configured to convey the resin material;
   a second cylinder connected to the first cylinder; and
   a second screw located in the second cylinder, wherein, when a valley radius of the first screw is d1, a ridge radius thereof is D1, a valley radius of the second screw is d2, and a ridge radius thereof is D2, a following relationship holds:

   $$D1/d1 \; < \; D2/d2.$$

   .

2. The extruder according to claim 1, wherein, when a radius of the first cylinder is D3 and a radius of the second cylinder is D4, a following relationship holds:

   $$D3/d1 \; < \; D4/d2.$$

3. The extruder according to claim 1, wherein the second screw includes a kneading section configured to knead the resin material.

4. The extruder according to claim 3, wherein the second screw includes an other conveying section configured to convey the resin material.

5. The extruder according to claim 1,

wherein the second screw includes an other conveying section configured to convey the resin material.

6. The extruder according to claim 1,
wherein the first screw includes a kneading section configured to knead the resin material.

7. The extruder according to claim 1,
wherein a diameter enlarging section whose inner diameter increases continuously toward the second cylinder is provided at a downstream end of the first cylinder in a conveyance direction of the resin material.

8. The extruder according to claim 1,

wherein a flow path to which a liquid material is supplied is provided in the second cylinder, and
wherein a pressure adjustment section capable of adjusting a pressure inside the second cylinder is provided on a downstream side relative to the second cylinder in a conveyance direction of the resin material.

9. The extruder according to claim 1,
wherein a backward conveying section configured to convey the resin material in a direction opposite to a conveyance direction of the resin material is provided at an upstream end of the first screw in the conveyance direction.

10. The extruder according to claim 1,
wherein an other backward conveying section configured to convey the resin material in a direction opposite to a conveyance direction of the resin material is provided at a downstream end of the second screw in the conveyance direction.

11. The extruder according to claim 10,
wherein the other backward conveying section conveys the resin material while kneading it.

12. The extruder according to claim 1,
wherein a temperature changing unit capable of changing a temperature of the resin material is provided in at least one of the first cylinder and the second cylinder.

13. The extruder according to claim 1,
wherein a valley portion having the valley radius and a ridge portion having the ridge radius are arranged in a radial direction of the first screw in the conveying section.

14. The extruder according to claim 13,

wherein the valley portion is formed in a circular ring shape, and

wherein the ridge portion protrudes from a part of the valley portion in a circumferential direction to a radially outer side.

15. The extruder according to claim 13,
wherein a plurality of the valley portion and the ridge portion are provided in a circumferential direction of the first screw.

*FIG. 1*

*FIG. 2A*

*FIG. 2B*

FIG. 3

*FIG. 4A*

*FIG. 4B*

## FIG. 5A

## FIG. 5B

*FIG. 6*

*FIG. 7*

*FIG. 8*

*FIG. 9*

FIG. 10

FIG. 11

## FIG. 12A

## FIG. 12B

*FIG. 13A*

*FIG. 13B*

## FIG. 14A

## FIG. 14B

*FIG. 15A*

*FIG. 15B*

*FIG. 15C*

FIG. 16

# EP 4 691 732 A1

## INTERNATIONAL SEARCH REPORT

International application No.

**PCT/JP2023/018235**

### A. CLASSIFICATION OF SUBJECT MATTER

***B29C 48/52***(2019.01)i; ***B29B 7/48***(2006.01)i; ***B29B 7/72***(2006.01)i; ***B29B 7/82***(2006.01)i; ***B29C 48/29***(2019.01)i;
***B29C 48/30***(2019.01)i; ***B29C 48/385***(2019.01)i; ***B29C 48/40***(2019.01)i; ***B29C 48/53***(2019.01)i; ***B29C 48/55***(2019.01)i;
***B29C 48/57***(2019.01)i; ***B29C 48/645***(2019.01)i; ***B29C 48/685***(2019.01)i; ***B29C 48/72***(2019.01)i; ***B29C 48/80***(2019.01)i;
***B29C 48/92***(2019.01)i
FI: B29C48/52; B29B7/48; B29B7/72; B29B7/82; B29C48/29; B29C48/30; B29C48/385; B29C48/40; B29C48/53;
B29C48/55; B29C48/57; B29C48/645; B29C48/685; B29C48/72; B29C48/80; B29C48/92

According to International Patent Classification (IPC) or to both national classification and IPC

### B. FIELDS SEARCHED

Minimum documentation searched (classification system followed by classification symbols)

B29C48/00-48/96; B29B7/00-7/94

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 57-47633 A (HERMANN BERSTORFF MACHINENBAU GMBH) 18 March 1982 (1982-03-18)<br>p. 3, upper right column, lines 14-16, p. 3, upper right column, line 20 to p. 3, lower left column, line 4, p. 3, lower right column, lines 1-6, p. 3, lower right column, lines 14-20, p. 4, upper left column, lines 8-10, p. 4, upper left column, lines 13-17, fig. 1 | 1-7, 12-15 |
| Y | | 3-4, 6, 8, 10-11 |
| X | JP 59-64340 A (HERMANN BERSTORFF MACHINENBAU GMBH) 12 April 1984 (1984-04-12)<br>p. 3, upper left column, lines 13-15, p. 3, upper right column, lines 17-20, drawings | 1-2, 5, 7, 12-15 |
| Y | | 3-4, 6, 8-11 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 June 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2023/018235** |

### C. DOCUMENTS CONSIDERED TO BE RELEVANT

| Category* | Citation of document, with indication, where appropriate, of the relevant passages | Relevant to claim No. |
|---|---|---|
| X | JP 59-39536 A (MODAN MASHINARII KK) 03 March 1984 (1984-03-03) <br> p. 2, lower left column, lines 10-18, p. 2, lower right column, lines 10-12, fig. 3-4 | 1-2, 5, 12-15 |
| Y | | 3-4, 6, 8-11 |
| X | KR 10-2009-0114643 A (ENS CO., LTD.) 04 November 2009 (2009-11-04) <br> paragraphs [0007], [0026]-[0027], fig. 1-2 | 1-2, 5, 12-15 |
| Y | | 3-4, 6, 8-11 |
| Y | WO 2017/179584 A1 (SUMITOMO CHEMICAL COMPANY, LIMITED) 19 October 2017 (2017-10-19) <br> paragraph [0061], fig. 1 | 8 |
| Y | JP 63-98412 A (MAZDA MOTOR CORPORATION) 28 April 1988 (1988-04-28) <br> p. 2, lower right column, line 19 to p. 3, lower left column, line 6, fig. 1 | 8 |
| Y | JP 48-32156 A (THE FURUKAWA ELECTRIC CO., LTD.) 27 April 1973 (1973-04-27) <br> p. 2, upper left column, line 20 to lower right column, line 5, fig. 1-4 | 9 |
| Y | JP 11-240059 A (THE JAPAN STEEL WORKS LTD.) 07 September 1999 (1999-09-07) <br> paragraphs [0012]-[0013], fig. 3 | 10-11 |

Form PCT/ISA/210 (second sheet) (January 2015)

## INTERNATIONAL SEARCH REPORT
### Information on patent family members

International application No.

**PCT/JP2023/018235**

| Patent document cited in search report | | | Publication date (day/month/year) | Patent family member(s) | | | Publication date (day/month/year) |
|---|---|---|---|---|---|---|---|
| JP | 57-47633 | A | 18 March 1982 | US | 4423960 | A | |
| | | | | column 3, lines 35-38, column 3, lines 42-46, column 3, line 66 to column 4, line 4, column 4, lines 11-17, column 4, lines 25-28, column 4, lines 31-37, fig. 1 | | | |
| | | | | GB | 2082959 | A | |
| | | | | DE | 3026842 | A1 | |
| | | | | FR | 2486865 | A1 | |
| JP | 59-64340 | A | 12 April 1984 | US | 4573799 | A | |
| | | | | column 3, lines 38-42, column 4, lines 6-9, drawings | | | |
| | | | | EP | 102400 | A1 | |
| JP | 59-39536 | A | 03 March 1984 | (Family: none) | | | |
| KR | 10-2009-0114643 | A | 04 November 2009 | (Family: none) | | | |
| WO | 2017/179584 | A1 | 19 October 2017 | JP | 2019-104107 | A | |
| JP | 63-98412 | A | 28 April 1988 | (Family: none) | | | |
| JP | 48-32156 | A | 27 April 1973 | (Family: none) | | | |
| JP | 11-240059 | A | 07 September 1999 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009184303 A